# EUROPÄISCHE PATENTSCHRIFT

(11) **EP 3 581 771 B1**
(45) Veröffentlichungstag und Bekanntmachung des Hinweises auf die Patenterteilung: **14.09.2022**
(21) Anmeldenummer: 19179296.9
(22) Anmeldetag: 11.06.2019
(51) Int. Cl.: F01N 3/021, F01N 13/00, F01N 3/035, F01N 9/00, F01N 3/05

(54) **ABGASNACHBEHANDLUNGSSYSTEM UND VERFAHREN ZUR REGENERATION EINES PARTIKELFILTERS**
EXHAUSTION TREATMENT SYSTEM AND METHOD FOR REGENERATING A PARTICLE FILTER
SYSTÈME DE TRAITEMENT DE GAZ D'ÉCHAPPEMENT ET PROCÉDÉ DE RÉGÉNÉRATION D'UN FILTRE À PARTICULES

(30) Priorität: 12.06.2018 DE 102018114025
(43) Veröffentlichungstag der Anmeldung: 18.12.2019
(73) Patentinhaber: Volkswagen AG, 38440 Wolfsburg (DE)
(72) Erfinder: Paukner, Stefan, 38442 Wolfsburg (DE); Baron von Ceumern-Lindenstjerna, Falk-Christian, 38124 Braunschweig (DE); Manz, Michael Alexander, 30855 Langenhagen (DE)
(74) Vertreter: Gulde & Partner

(56) Entgegenhaltungen:
- DE-A1-102013 018 208
- DE-A1-102014 115 923
- DE-A1-102015 212 514
- DE-A1-102016 122 304

## Beschreibung

Die Erfindung betrifft ein Abgasnachbehandlungssystem für einen Verbrennungsmotor sowie ein Verfahren zur Regeneration eines Partikelfilters in der Abgasanlage eines Ottomotors.

Die kontinuierliche Verschärfung der Abgasgesetzgebung stellt hohe Anforderungen an die Fahrzeughersteller, welche durch entsprechende Maßnahmen zur Reduktion der motorischen Rohemissionen und durch eine entsprechende Abgasnachbehandlung gelöst werden. Mit Einführung der Gesetzgebungsstufe EU6 wird für Ottomotoren ein Grenzwert für eine Partikelanzahl vorgeschrieben, der in vielen Fällen den Einsatz eines Ottopartikelfilters notwendig macht. Solche Rußpartikel entstehen besonders nach einem Kaltstart des Verbrennungsmotors aufgrund einer unvollständigen Verbrennung in Kombination mit einem unterstöchiometrischen Verbrennungsluftverhältnis nach dem Kaltstart, kalter Zylinderwände sowie der heterogenen Gemischverteilung in den Brennräumen des Verbrennungsmotors. Im Gegensatz zur Beladung eines Dieselpartikelfilters erfolgt die Rußbeladung eines Ottopartikelfilters im Wesentlichen in Abhängigkeit der Brennraumtemperatur und nimmt mit zunehmender Brennraumtemperatur ab. Die Kaltstartphase ist somit maßgeblich für die Einhaltung der gesetzlich vorgeschriebenen Partikelgrenzwerte sowohl bezüglich der Partikelmasse als auch bezüglich der Partikelanzahl. Bei kalten Außentemperaturen, insbesondere bei Umgebungstemperaturen unterhalb von 0°C werden bei einem Ottomotor aufgrund der geringen Gemischhomogenisierung und Verdampfung des Kraftstoffs sowie der Startanreicherung besonders hohe Partikelemissionen emittiert. Zudem führt ein Kaltstart mit einem unterstöchiometrischen, fetten Verbrennungsluftverhältnis zu höheren Emissionen an Kohlenmonoxid (CO) und unverbrannten Kohlenwasserstoffen (HC), da eine Konvertierung in Kohlenstoffdioxid und Wasserdampf aufgrund des kalten Katalysators noch nicht möglich ist. Im Fahrbetrieb wird bei Kraftfahrzeugen mit einem Ottopartikelfilter dieser Ottopartikelfilter dann weiter mit Ruß beladen. Damit der Abgasgegendruck nicht zu stark ansteigt, muss dieser Ottopartikelfilter kontinuierlich oder periodisch regeneriert werden. Der Anstieg des Abgasgegendrucks kann zu einem Mehrverbrauch des Verbrennungsmotors, Leistungsverlust und einer Beeinträchtigung der Laufruhe bis hin zu Zündaussetzern führen. Um eine thermische Oxidation des im Ottopartikelfilter zurückgehaltenen Rußes mit Sauerstoff durchzuführen, ist ein hinreichend hohes Temperaturniveau in Verbindung mit gleichzeitig vorhandenem Sauerstoff in der Abgasanlage des Ottomotors notwendig. Da moderne Ottomotoren normalerweise ohne Sauerstoffüberschuss mit einem stöchiometrischen Verbrennungsluftverhältnis (λ=1) betrieben werden, sind dazu zusätzliche Maßnahmen erforderlich. Dazu kommen als Maßnahmen beispielsweise eine Temperaturerhöhung durch eine Zündwinkelverstellung, eine zeitweise Magerverstellung des Ottomotors, das Einblasen von Sekundärluft in die Abgasanlage oder eine Kombination dieser Maßnahmen infrage. Bevorzugt wird bislang eine Zündwinkelverstellung in Richtung spät in Kombination mit einer Magerverstellung des Ottomotors angewandt, da dieses Verfahren ohne zusätzliche Bauteile auskommt und in den meisten Betriebspunkten des Ottomotors eine ausreichende Sauerstoffmenge liefern kann.

Aufgrund der guten Wirkungsgrade beim Ottomotor ist eine Regeneration eines Partikelfilters in Unterbodenposition in bestimmten Betriebssituationen unmöglich, sodass die Regeneration eines Partikelfilters in Unterbodenlage spezieller Fahrzyklen bedarf.

Die DE 10 2010 046 747 A1 offenbart ein Abgasnachbehandlungssystem für einen Ottomotor sowie ein Verfahren zur Abgasnachbehandlung. Dabei ist stromabwärts eines Drei-Wege-Katalysators ein Partikelfilter angeordnet, wobei zur Regeneration der im Partikelfilter zurückgehaltenen Rußpartikel ein Sekundärluftsystem bereitgestellt werden kann, welches stromabwärts des Drei-Wege-Katalysators und stromaufwärts des Partikelfilters Frischluft in die Abgasanlage einbläst. Dabei wird die Sekundärluft genutzt, um unverbrannte Abgasbestandteile, insbesondere unverbrannte Kohlenwasserstoffe, exotherm umzusetzen und den Abgasstrom aufzuheizen sowie den zur Regeneration des Partikelfilters notwendigen Sauerstoff zu liefern.

Aus der DE 10 2013 018 208 A1 ist ein Abgasnachbehandlungssystem für einen fremdgezündeten Verbrennungsmotor zur Reinigung eines Abgasstromes des Fremdzündungsmotors bekannt. Das Abgasnachbehandlungssystem weist eine erste Katalysatoreinheit, welche motornah angeordnet ist und einen dem Fremdzündungsmotor nachgeschalteten ersten Drei-Wege-Katalysator sowie einen dem Drei-Wege-Katalysator nachgeschalteten Partikelfilter auf, sowie eine zweite Katalysatoreinheit, welche der ersten Katalysatoreinheit nachgeschaltet ist und einen zweiten Drei-Wege-Katalysator umfasst. Dabei ist der zweite Drei-Wege-Katalysator in einem Unterboden eines Kraftfahrzeuges angeordnet.

Die DE 10 2014 115 923 A1 offenbart eine Wabenkörperanordnung mit einer elektrischen Heizvorrichtung, wobei die elektrische Heizvorrichtung mindestens einen elektrisch isolierten Heizdraht mit einem Drahtdurchmesser umfasst, der mittels einer Stiftanordnung an einer Stirnseite eines Wabenkörpers mit einem Abstand von mindestens einem Fünffachen und maximal einem Fünfzehnfachen des Drahtdurchmessers fixiert ist.

DE 10 2016 122 304 A1 beschreibt ein Verfahren zum Aufheizen eines elektrisch beheizbaren Katalysators in einem Abgaskanal eines Kraftfahrzeuges mit einem Verbrennungsmotor. Um den Katalysator vor einem Start des Verbrennungsmotors aufzuheizen, ist vorgesehen, dass der Katalysator bereits vor dem Motorstart des Verbrennungsmotors elektrisch aufgeheizt wird und bereits mit dem Motorstart eine effiziente Abgasnachbehandlung ermöglicht. Dabei erfolgt nach einer elektrischen Vorheizphase nach dem Motorstart eine weitere Aufheizung durch die exotherme Umsetzung von unverbrannten Kraftstoffkomponenten auf einer katalytisch wirksamen Oberfläche des elektrisch beheizbaren Katalysators.

Aus der DE 10 2015 212 514 A1 ist ein Abgasnachbehandlungssystem für einen Ottomotor bekannt, welches einen Abgaskanal, einen im Abgaskanal angeordneten ersten Drei-Wege-Katalysator, einen in Strömungsrichtung des Abgases nachfolgenden Partikelfilter und in Strömungsrichtung des Abgases vor dem Partikelfilter angeordnete Mittel zur Sekundärlufteinbringung in den Abgaskanal aufweist. Es ist vorgesehen, dass in Strömungsrichtung des Abgases zwischen den Mitteln zur Sekundärlufteinbringung und dem Partikelfilter ein zweiter Drei-Wege-Katalysator im Abgaskanal angeordnet ist oder der Partikelfilter eine drei-Wege-katalytische Beschichtung aufweist.

Nachteilig an diesen Lösungen ist jedoch, dass für diese exotherme Reaktion bereits ein hohes Temperaturniveau in der Abgasanlage erreicht sein muss, um die unverbrannten Abgasbestandteile exotherm umzusetzen.

Der Erfindung liegt nun die Aufgabe zugrunde, in allen Betriebssituationen eines Kraftfahrzeuges eine Regeneration des Partikelfilters zu ermöglichen.

Erfindungsgemäß wird diese Aufgabe durch ein Abgasnachbehandlungssystem für einen Verbrennungsmotor, insbesondere einen mittels Zündkerzen fremdgezündeten Ottomotors, mit einer Abgasanlage umfassend mindestens einen motornahen Drei-Wege-Katalysator und einen stromabwärts des mindestens einen motornahen Drei-Wege-Katalysators angeordneten Partikelfilter gelöst.

Der Verbrennungsmotor ist vorzugsweise ein Verbrennungsmotor zum Antrieb eines Kraftfahrzeuges. Erfindungsgemäß ist vorgesehen, dass stromabwärts des mindestens einen Drei-Wege-Katalysators und stromaufwärts des Partikelfilters oder Vier-Wege-Katalysators ein Heizkatalysator mit mindestens einem elektrischen Heizelement angeordnet ist, wobei das elektrische Heizelement derart mit einem Generator des Verbrennungsmotors verbunden ist, dass ein Aufheizen des mindestens einen elektrischen Heizelements unmittelbar durch den vom Generator erzeugten elektrischen Strom möglich ist. Unter einer motornahen Position ist in diesem Zusammenhang eine Position des Drei-Wege-Katalysators in der Abgasanlage mit einer Abgaslauflänge ab einem Auslass des Verbrennungsmotors von weniger als 80 cm Abgaslauflänge, vorzugsweise von weniger als 50 cm Abgaslauflänge, zu verstehen. Unter einer unmittelbaren Stromversorgung des elektrischen Heizelements aus dem Generator ist zu verstehen, dass der zur Beheizung notwendige Strom nicht durch eine Batterie zwischengespeichert wird oder vom Betrieb eines elektrischen Verbrauchers abhängig ist. Somit kann das Aufheizen des elektrischen Heizelements unabhängig vom Ladezustand der Batterie oder dem Betriebszustand des Verbrauchers erfolgen. Die Konvertierung der Schadstoffe erfolgt dabei durch den oder die motornahen Drei-Wege-Katalysator(en). Der Partikelfilter kann dabei frei von einer katalytisch wirksamen Beschichtung ausgeführt werden, wodurch kein Einfluss auf die Konvertierung der gasförmigen Abgaskomponenten besteht und eine On-Board-Diagnose des Partikelfilters über Differenzdrucksensoren erfolgen kann. Dabei wird die Heizleistung zum Aufheizen des Partikelfilters bevorzugt durch den Generatorbetrieb eines mittels eines Antriebselements vom Verbrennungsmotor angetriebenen Generator bereitgestellt. Durch die zusätzliche Last erfolgt eine Lastpunktverschiebung des Verbrennungsmotors, was zusätzlich zu einer Erhöhung des Abgaswärmestromes führt. Diese erhöht zusätzlich den Wärmeeintrag in den Partikelfilter, wodurch dieser schneller auf eine zur Oxidation des zurückgehaltenen Rußes notwendige Regenerationstemperatur aufgeheizt wird. Darüber hinaus wird der Ladezustand der Batterie nicht negativ durch einen Heizvorgang beeinflusst, wodurch die Regeneration des Partikelfilters unabhängig vom Ladezustand der Batterie ist.

Durch die in den abhängigen Ansprüchen genannten Merkmale sind vorteilhafte Verbesserungen und Weiterentwicklungen der im unabhängigen Anspruchs genannten Abgasnachbehandlungsvorrichtung möglich.

In einer bevorzugten Ausführungsform der Erfindung ist vorgesehen, dass der Heizkatalysator eine Mehrzahl von elektrischen Heizelementen umfasst. Durch den Einsatz von mehreren Heizstufen kann die mögliche elektrische Heizleistung multipliziert werden. Dadurch sind große Heizleistungen darstellbar, mit welchen eine Regeneration des Partikelfilters auch bei geringer Last des Verbrennungsmotors und niedrigen Außentemperaturen möglich ist.

Besonders bevorzugt ist dabei, wenn der Heizkatalysator eine Mehrzahl von sequenziell angeordneten Heizstufen umfasst, wobei jeder Heizstufe ein Stützkatalysator nachgeschaltet ist. Durch mindestens zwei sequenziell nacheinander durchströmte Heizstufen kann eine lokale Überhitzung des Heizkatalysators vermieden werden, sodass die Gefahr einer thermischen Schädigung des Heizkatalysators reduziert wird und dennoch eine hohe Heizleistung in den Abgasstrom eingebracht werden kann.

In einer vorteilhaften Ausführungsform der Erfindung ist vorgesehen, dass die elektrischen Heizelemente als elektrische Heizscheiben ausgebildet sind. Elektrische Heizscheiben können einfach und kostengünstig an dem Gehäuse des Heizkatalysators und/oder an dem Stützkatalysator befestigt werden. Dabei haben die Heizscheiben in Strömungsrichtung des Abgases durch den Heizkatalysator nur eine geringe Ausdehnung, sodass auf einfache Art und Weise mehrere sequenziell aufeinander folgende Heizstufen ausgebildet werden können.

In einer bevorzugten Ausführungsform der Erfindung ist vorgesehen, dass der Partikelfilter frei von einer katalytischen Beschichtung ausgeführt ist. Durch eine Ausführung des Partikelfilters frei von einer katalytischen Beschichtung kann der Abgasgegendruck reduziert werden, wodurch die Intervalle zwischen zwei Regenerationsdurchführungen verlängert werden können. Ferner wird durch den reduzierten Abgasgegendruck der Verbrauch des Verbrennungsmotors reduziert beziehungsweise die verfügbare Leistung gesteigert. Darüber hinaus kann eine On-Board-Diagnose über die Drucksensoren zur Differenzdruckmessung des Partikelfilters erfolgen, wobei eine Diagnose lediglich den Komplettausfall des Partikelfilters überwachen muss, und keine vergleichsweise Sensorik zur Überwachung der Funktionalität einer katalytischen Beschichtung notwendig ist.

Erfindungsgemäß ist vorgesehen, dass in der Abgasanlage stromabwärts des ersten Drei-Wege-Katalysators und stromaufwärts des Heizkatalysators ein zweiter Drei-Wege-Katalysator angeordnet ist, wobei in der Abgasanlage stromaufwärts des ersten Drei-Wege-Katalysators eine erste Lambdasonde und stromabwärts des ersten Drei-Wege-Katalysators sowie stromaufwärts des zweiten Drei-Wege-Katalysators eine zweite Lambdasonde angeordnet ist. Durch zwei motornahe Katalysatoren kann ein entsprechend hohes Katalysatorvolumen zur Verfügung gestellt werden, wodurch eine hohe Konvertierungsleistung auch bei großen Abgasvolumina infolge von einem Hochlastbetrieb des Verbrennungsmotors und hohen Drehzahlen erfolgen kann.

Erfindungsgemäß ist vorgesehen, dass stromabwärts des zweiten Drei-Wege-Katalysators und stromaufwärts des Heizkatalysators eine Einleitstelle zur Einleitung von Sekundärluft in die Abgasanlage vorgesehen ist. Dabei sollte die Einleitstelle für die Sekundärluft möglichst weit stromaufwärts des Heizkatalysators angeordnet sein, um eine möglichst lange Mischstrecke für das Abgas und die Frischluft bereitzustellen und somit eine gute Vermischung des Abgas-Frischluft-Gemischs bis zum Eintritt in den Partikelfilter zu erreichen. Die Sekundärluft kann mittels einer Sekundärluftpumpe, eines Kompressors oder eines Verdichterabgriffs des Verdichters eines Abgasturboladers bereitgestellt werden und sollte idealerweise so erfolgen, dass sich ein Abgasluftverhältnis für des vermischte Abgas von 1,05 < λ_{M} <1,2 vor dem Eintritt in den Partikelfilter einstellt.

Alternativ ist mit Vorteil vorgesehen, dass motornah genau ein Drei-Wege-Katalysator angeordnet ist und der Partikelfilter mit einer Drei-Wege-katalytisch wirksamen Beschichtung als Vier-Wege-Katalysator ausgebildet ist. Dies hat den Vorteil, dass ein zweiter (motornaher) Drei-Wege-Katalysator entfallen kann und insgesamt weniger Bauteile benötigt werden, was die Kosten für das Abgasnachbehandlungssystem und den benötigten Bauraum reduziert. Diese Anordnung kann jedoch zu einem geringfügigen Anstieg der Emissionen bei der Regeneration des Partikelfilters führen.

Ferner ist alternativ vorgesehen, dass der Heizkatalysator eine Drei-Wege-katalytisch wirksame Beschichtung aufweist. Durch eine katalytische Beschichtung des Heizkatalysators kann, insbesondere in Kombination mit einem Sekundärluftsystem, das Aufheizen des Heizkatalysators beschleunigt werden. Ferner wird ein zusätzliches katalytisches Volumen bereitgestellt, was insbesondere bei hohen Raumgeschwindigkeiten und hohen Abgasvolumina die Effizienz der Abgasnachbehandlung verbessern kann. Dies erfordert jedoch zusätzliche Sensoren, um eine On-Board-Diagnose des katalytischen Verhaltens des Heizkatalysators zu überwachen.

Erfindungsgemäß wird ein Verfahren zur Abgasnachbehandlung eines Verbrennungsmotors mit einem erfindungsgemäßen Abgasnachbehandlungssystem vorgeschlagen, welches folgende Schritte umfasst:
- Ermitteln eines Beladungszustandes des Partikelfilters
- Ermitteln einer Bauteiltemperatur des Partikelfilters
- Aufheizen des Partikelfilters auf eine zur Oxidation des im Partikelfilter zurückgehaltenen Rußes notwendigen Regenerationstemperatur, wenn eine Regeneration des Partikelfilters angefordert wird und die Bauteiltemperatur des Partikelfilters unterhalb der Regenerationstemperatur liegt, wobei
- das elektrische Heizelement des Heizkatalysators unmittelbar aus dem Generator mit elektrischem Strom versorgt wird.

Das erfindungsgemäße Verfahren hat den Vorteil, dass in allen Betriebssituationen eines Kraftfahrzeuges auch bei einem Partikelfilter in einer motorfernen Position, insbesondere in einer Unterbodenposition des Kraftfahrzeuges die zur Regeneration des Partikelfilters notwendige Temperatur erreicht werden kann. Dabei wird die Batterie in diesen Betriebssituationen, in denen in der Regel nur eine vergleichsweise geringe Leistung des Generators und somit ein geringer Ladestrom für die Batterie vorliegt, nicht zusätzlich belastet, sodass die Regeneration des Partikelfilters unabhängig vom Ladezustand der Batterie erfolgen kann.

Erfindungsgemäß ist vorgesehen, das bei Feststellen einer Regenerationsanforderung des Partikelfilters durch den Generator eine Zusatzlast erzeugt wird, sodass ein Betriebspunkt des Verbrennungsmotors bei gleicher Drehzahl in Richtung eines höheren Motordrehmoments verschoben wird, sodass sich bei gleicher Drehzahl eine höhere Abgastemperatur einstellt. Durch eine Erhöhung der Motorlast durch eine höhere Lastanforderung für den Generator wird die benötigte Leistung angehoben. Dadurch steigt die Temperatur des Abgases bei konstanter Drehzahl des Verbrennungsmotors, wodurch das Aufheizen des Partikelfilters durch ein heißeres Abgas zusätzlich zum elektrischen Beheizen des Abgasstroms durch den Heizkatalysator erfolgt. Somit kann der Partikelfilter bei ansonsten gleichen Betriebsbedingungen schneller auf seine Regenerationstemperatur aufgeheizt werden.

Erfindungsgemäß ist vorgesehen, dass der Verbrennungsmotor während der Regeneration des Partikelfilters mit einem unterstöchiometrischen oder stöchiometrischen Verbrennungsluftverhältnis betrieben wird, wobei stromabwärts des letzten Drei-Wege-Katalysators Sekundärluft in die Abgasanlage eingeblasen wird, derart, dass sich am Eingang des Partikelfilters ein überstöchiometrisches Abgas mit einem Abgasluftverhältnis von 1,05 < λ <1,2 einstellt. Dabei können die Emissionen des Verbrennungsmotors durch den mindestens einen Drei-Wege-Katalysator effizient konvertiert werden, sodass die Regeneration des Partikelfilters nicht zu einem Anstieg der Emissionen, insbesondere nicht zu einem Anstieg der NOx-Emissionen durch einen überstöchiometrischen Betrieb des Verbrennungsmotors zur Bereitstellung des zur Regeneration des Partikelfilters benötigten Sauerstoffs, kommt.

Die verschiedenen in dieser Anmeldung genannten Ausführungsformen der Erfindung sind, sofern im Einzelfall nicht anders ausgeführt, mit Vorteil miteinander kombinierbar.

Die Erfindung wird nachfolgend in Ausführungsbeispielen anhand der zugehörigen Zeichnungen erläutert. Es zeigen:
- Figur 1: ein erstes Ausführungsbeispiel für einen Verbrennungsmotor mit einem erfindungsgemäßen Abgasnachbehandlungssystem;
- Figur 2: ein alternatives Ausführungsbeispiel für einen Verbrennungsmotor mit einem Generator und einem Abgasnachbehandlungssystem, bei dem zusätzlich ein Sekundärluftsystem zum Einblasen von Frischluft in den Abgaskanal der Abgasanlage vorgesehen ist;
- Figur 3: ein bevorzugtes Ausführungsbeispiel für einen Heizkatalysator für ein erfindungsgemäßes Abgasnachbehandlungssystem; und
- Figur 4: ein Diagramm zur Visualisierung einer Lastpunktverschiebung durch eine Lasterhöhung durch den Generator bei einem erfindungsgemäßen Verfahren zur Regeneration eines Partikelfilters.

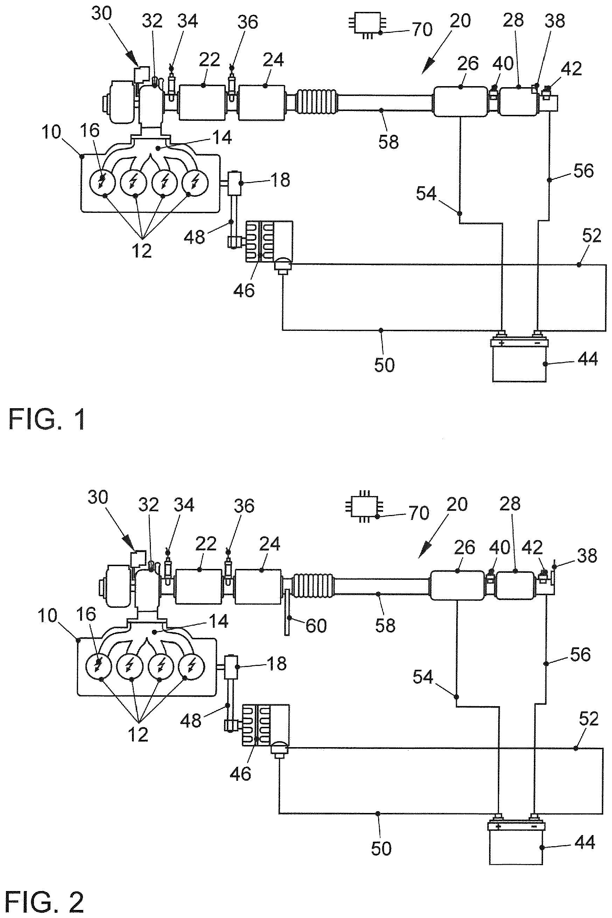

Figur 1 zeigt einen mittels Zündkerzen 16 fremdgezündeten Verbrennungsmotor 10. Der Verbrennungsmotor weist eine Mehrzahl von Brennräumen 12 auf. Der Verbrennungsmotor 10 ist mit seinem Auslass 14 mit einer Abgasanlage 20 verbunden. Ferner ist an dem Verbrennungsmotor 10 eine Abtriebswelle 18 vorgesehen, welche über ein Antriebselement 48 einen Generator 46 antreibt. Das Antriebselement 48 kann insbesondere als ein Riemen oder eine Kette ausgeführt sein. Die Abgasanlage 20 umfasst einen Abgaskanal 58, in welchem in Strömungsrichtung eines Abgases durch den Abgaskanal 58 eine Turbine 32 eines Abgasturboladers 30, stromabwärts der Turbine 32 ein erster motornaher Drei-Wege-Katalysator 22 und stromabwärts des ersten Drei-Wege-Katalysators 22 ein weiterer Drei-Wege-Katalysator 24 angeordnet sind. Stromabwärts des zweiten Drei-Wege-Katalysators 24 ist ein Heizkatalysator 26 angeordnet, über welchen ein Abgasstrom des Verbrennungsmotors 10 vor Eintritt in einen stromabwärts des Heizkatalysators 26 angeordneten Partikelfilter 28 aufgeheizt werden kann. Der Partikelfilter 28 ist vorzugsweise frei von einer katalytischen Beschichtung ausgeführt. Alternativ kann der Partikelfilter 28 auch als sogenannter Vier-Wege-Katalysator 29, das heißt als Partikelfilter 28 mit einer Drei-Wege-katalytisch wirksamen Beschichtung ausgeführt sein. Stromabwärts des Auslasses 14 und stromaufwärts des ersten Drei-Wege-Katalysators 22, vorzugsweise stromabwärts der Turbine 32 des Abgasturboladers 30 und stromaufwärts des ersten Drei-Wege-Katalysators 22 ist in dem Abgaskanal 58 eine erste Lambdasonde 34, vorzugsweise eine Breitband-Lambdasonde, angeordnet. Stromabwärts des ersten Drei-Wege-Katalysators 22 und stromaufwärts des zweiten Drei-Wege-Katalysators 24 ist im Abgaskanal 58 eine zweite Lambdasonde, insbesondere eine Trimm-Lambdasonde 36, angeordnet. Stromabwärts des Heizkatalysators 26 und stromaufwärts des Partikelfilters 28 ist im Abgaskanal 58 ein erster Drucksensor 40 vorgesehen. Stromabwärts des Partikelfilters 28 ist ein zweiter Drucksensor 42 vorgesehen, sodass eine Differenzdruckmessung über den Partikelfilter 28 erfolgen kann. Ferner kann in der Abgasanlage 58 mindestens ein Temperatursensor 38 vorgesehen sein, um eine Abgastemperatur und/oder zumindest eine Bauteiltemperatur einer Abgasnachbehandlungskomponente 22, 24, 26, 28, 29, insbesondere eine Temperatur des Partikelfilters 28 oder des Vier-Wege-Katalysators 29, zu ermitteln.

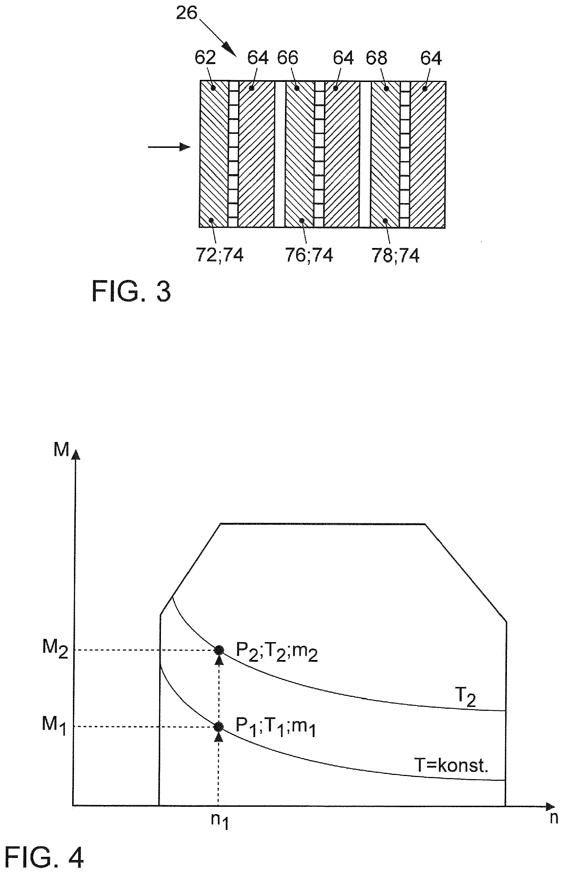

In Figur 3 ist ein elektrische Heizkatalysator 26 eines erfindungsgemäßen Abgasnachbehandlungssystems in einer schematischen Schnittdarstellung gezeigt. Der Heizkatalysator 26 weist in diesem Ausführungsbeispiel drei Heizstufen 62, 66, 68 auf, wobei jede Heizstufe 62, 66, 68 aus Stabilitätsgründen unmittelbar mit einem Stützkatalysator 64 verbunden ist. Durch den Einsatz von mehreren Heizstufen 62, 66, 68 kann die elektrische Heizleistung multipliziert und somit die im Partikelfilter erreichbare Temperatur erhöht werden. Die Heizstufen 62, 66, 68 weisen jeweils ein elektrisches Heizelement 72, 76, 78, vorzugsweise in Form einer elektrischen Heizscheibe 74, auf. Ferner ist ein Steuergerät 70 zur Ansteuerung des Verbrennungsmotors 10 und des Generators 46 vorgesehen, welches über entsprechende Signalleitungen mit den Lambdasonden 34, 36 und Sensoren 38, 40, 42 der Abgasanlage 20 verbunden ist.

Der Generator 46 ist über eine erste elektrische Leitung 50 mit dem Pluspol einer Batterie 44 verbunden. Der Generator 46 ist über eine zweite elektrische Leitung 52 mit dem Minuspol der Batterie 44 verbunden. Der Pluspol ist über eine dritte elektrische Leitung 54 mit mindestens einer elektrischen Heizstufe 62, 66, 68 des Heizkatalysators 26 verbunden. Der Abgaskanal 58 ist über eine vierte elektrische Leitung 56 (Masseleitung) mit dem Minuspol der Batterie 44 verbunden. Dadurch ist über die elektrischen Leitungen 50, 54 und 52, 56 eine unmittelbare Verbindung zwischen dem Generator 46 und den elektrischen Heizelementen 72, 74, 76, 78 des Heizkatalysators 26 vorhanden. Die für die Beheizung der Heizstufen 62, 66, 68 notwendige elektrische Energie wird während der Heizphase und der Regeneration des Partikelfilters 28 unmittelbar aus dem Generator 46 entnommen, welcher vorzugsweise ein 48-Volt-Bordnetz mit elektrischem Strom versorgt.

In Figur 2 ist ein weiteres Ausführungsbeispiel eines Verbrennungsmotors 10 mit einem erfindungsgemäßen Abgasnachbehandlungssystem dargestellt. Bei im Wesentlichen gleichem Aufbau wie zu Figur 1 ausgeführt ist in diesem Ausführungsbeispiel zusätzlich ein Sekundärluftsystem vorgesehen, mit welchem Sekundärluft stromabwärts des zweiten Drei-Wege-Katalysators 24 und stromaufwärts des Heizkatalysators 26 in den Abgaskanal 58 der Abgasanlage 20 eingeblasen werden kann. Dabei liegt die Einleitstelle 60 für die Sekundärluft möglichst weit stromaufwärts des Heizkatalysators 26 und somit möglichst weit stromaufwärts des Partikelfilters 28 oder des Vier-Wege-Katalysators 29, um eine bestmögliche Vermischung zwischen der über die Einleitstelle 60 zugeführten Sekundärluft und dem Abgas bis zum Eintritt in den Partikelfilter 28 oder in den Vier-Wege-Katalysator 29 zu ermöglichen.

Die Konvertierung der gasförmigen Schadstoffe erfolgt ausschließlich über die zwei motornahen Drei-Wege-Katalysatoren 22, 24. Der Partikelfilter 28 und der Heizkatalysator 26 werden vorzugsweise unbeschichtet ausgeführt. Dies hat den Vorteil, dass der Partikelfilter 28 bezüglich der On-Board-Diagnose lediglich mittels der Differenzdrucksensoren 40, 42 gegen einen Totalausfall überwacht werden kann. Eine zusätzliche Lambdasonde zur Diagnose oder ein weiterer Drei-Wege-Katalysator stromabwärts des Partikelfilters 28 können somit entfallen. Während des Motorbetriebs des Verbrennungsmotors 10 wird das Abgas des Verbrennungsmotors 10 durch die Drei-Wege-Katalysatoren 22, 24 und den Partikelfilter 28 gereinigt. Hat der Partikelfilter 28 ein mittels der Differenzdrucksensoren 40, 42 oder eines Beladungsmodells bestimmbares Beladungsniveau erreicht, wird eine Regeneration des Partikelfilters 28 angefordert. Um auch bei einem Partikelfilter 28 in Unterbodenlage eines Kraftfahrzeuges die zur Regeneration notwendige Temperatur zu erreichen, werden die Heizstufen 62, 66, 68 des Heizkatalysators 26 elektrisch bestromt und entsprechend erhitzt. Gleichzeitig erfolgt durch die Zusatzlast des Generators 46 eine Lastpunktverschiebung des Verbrennungsmotors 10 bei gleicher Drehzahl zu einem höheren Drehmoment und somit einer höheren Leistung, was zusätzlich zu einer Erhöhung der Abgastemperatur führt. Eine solche Lastpunktverschiebung während des Aufheizens des Heizkatalysators 26 beziehungsweise der Regeneration des Partikelfilters 28 ist in Figur 4 dargestellt.

Dabei sind unterschiedliche Lastpunkte und Isothermen im Kennfeld des Verbrennungsmotors 10 in Abhängigkeit von der Drehzahl n und dem Drehmoment M dargestellt. Im Ausgangsniveau wird der Verbrennungsmotor 10 mit einer Drehzahl n₁, Drehmoment M₁, Abgasmassenstrom m₁ und einer Leistung P₁ betrieben. Durch das Zuschalten des Generators 46 beziehungsweise eine Lasterhöhung für den Generator 46 ergibt sich bei konstanter Drehzahl n₂ = n₁ eine Verschiebung hin zu einer höheren Leistung P₂ mit einem größeren Drehmoment M₂, wodurch die Abgastemperatur und der Abgasmassenstrom m₂ steigen. Die somit gewonnene zusätzliche Leistung wird über den Generator 46 in den Heizkatalysator 26 eingeleitet, sodass sich eine weitere Temperaturerhöhung des Abgases vor Eintritt in den Partikelfilter 28 ergibt. Nach Abschluss der Regeneration des Partikelfilters wird die Generatorleistung wieder reduziert, sodass der Verbrennungsmotor 10 wieder mit einer geringeren Leistung P1 und einer geringeren Abgastemperatur betrieben wird.

Der für die Regeneration des Partikelfilters 28 notwendige Sauerstoff kann beispielsweise durch eine Schubphase des Verbrennungsmotors 10 zugeführt werden. Alternativ kann der Sauerstoff auch durch eine Magerverstellung des Verbrennungsmotors 10 zugeführt werden. Ist wie im Ausführungsbeispiel gemäß Figur 2 ein Sekundärluftsystem vorhanden, so wird der zur Oxidation des Rußes notwendige Sauerstoff durch eine Sekundärlufteinblasung in den Abgaskanal 58 stromabwärts des zweiten Drei-Wege-Katalysators 24 bereitgestellt. Die notwendige Sekundärluft kann durch eine Sekundärluftpumpe, einen Kompressor oder durch einen Luftabgriff von Frischluft aus dem Ansaugsystem stromabwärts des Verdichters des Abgasturboladers 30 erfolgen. Das Mischungsverhältnis von Abgas und Sekundärluft wird idealerweise so eingestellt, dass sich am Einlass des Partikelfilters 28 ein Mischlambda von 1,05 < λ_{M} <1,2 einstellt. Dabei wird für die Regeneration hinreichend Sauerstoff bereitgestellt und die Gefahr eines unkontrollierten Rußabbrandes auf dem Partikelfilter 28 vermieden.

### Bezugszeichenliste

- 10: Verbrennungsmotor
- 12: Brennraum
- 14: Auslass
- 16: Zündkerze
- 18: Abtriebswelle

- 20: Abgasanlage
- 22: erster Drei-Wege-Katalysator
- 24: zweiter Drei-Wege-Katalysator
- 26: Heizkatalysator
- 28: Partikelfilter
- 29: Vier-Wege-Katalysator

- 30: Abgasturbolader
- 32: Turbine
- 34: erste Lambdasonde
- 36: zweite Lambdasonde
- 38: Temperatursensor

- 40: erster Drucksensor
- 42: zweiter Drucksensor
- 44: Batterie
- 46: Generator
- 48: Antriebselement

- 50: erste elektrische Leitung
- 52: zweite elektrische Leitung
- 54: dritte elektrische Leitung
- 56: vierte elektrische Leitung
- 58: Abgaskanal
- 60: Einleitstelle
- 62: erste Heizstufe
- 64: Stützkatalysator
- 66: zweite Heizstufe
- 68: dritte Heizstufe

- 70: Steuergerät
- 72: erstes elektrisches Heizelement
- 74: Heizscheibe
- 76: zweites elektrisches Heizelement
- 78: drittes elektrisches Heizelement

- λ_{E}: Verbrennungsluftverhältnis
- M: Drehmoment
- n: Drehzahl
- P: Wirkungsgrad
- T: Temperatur

## Patentansprüche

1. Abgasnachbehandlungssystem für einen Verbrennungsmotor (10) mit einer Abgasanlage (20) umfassend einen motornahen Drei-Wege-Katalysator (22, 24) und einen stromabwärts des motornahen Drei-Wege-Katalysators (22, 24) angeordneten Partikelfilter (28, 29), wobei stromabwärts des Drei-Wege-Katalysators (22, 24) und stromaufwärts des Partikelfilters (28, 29) ein Heizkatalysator (26) mit mindestens einem elektrischen Heizelement (72, 74, 76, 78) angeordnet ist, wobei das elektrische Heizelement (72, 74, 76, 78) derart mit einem Generator (46) des Verbrennungsmotors (10) verbunden ist, dass ein Aufheizen des mindestens einen elektrischen Heizelements (72, 74, 76, 78) unmittelbar durch den vom Generator (46) erzeugten elektrischen Strom möglich ist, wobei in der Abgasanlage (20) stromabwärts des ersten Drei-Wege-Katalysators (22) und stromaufwärts des Heizkatalysators (26) ein zweiter Drei-Wege-Katalysator (24) angeordnet ist, und stromaufwärts des ersten Drei-Wege-Katalysators (22) eine erste Lambdasonde (34) und stromabwärts des ersten Drei-Wege-Katalysators (22) sowie stromaufwärts des zweiten Drei-Wege-Katalysators (24) eine zweite Lambdasonde (36) angeordnet sind, **dadurch gekennzeichnet, dass** stromabwärts des zweiten Drei-Wege-Katalysators (24) und stromaufwärts des Heizkatalysators (26) eine Einleitstelle (60) zur Einleitung von Sekundärluft in die Abgasanlage (20) vorgesehen ist, sowie mit einem Steuergerät (70), welches dazu eingerichtet ist, bei Feststellen einer Regenerationsanforderung des Partikelfilters (28, 29) durch den Generator (46) eine Zusatzlast zu erzeugen, sodass ein Betriebspunkt (P1) des Verbrennungsmotors (10) bei gleicher Drehzahl (n₁ = n₂) in Richtung eines höheren Motordrehmoments verschoben wird und sich bei gleicher Drehzahl (n) eine höhere Abgastemperatur (T_{EG}) einstellt, wobei während der Regeneration des Partikelfilters (28, 29) der Verbrennungsmotor (10) mit einem unterstöchiometrischen oder stöchiometrischen Verbrennungsluftverhältnis betrieben wird und stromabwärts des letzten Drei-Wege-Katalysators (22, 24) Sekundärluft in die Abgasanlage (20) eingeblasen wird, derart, dass sich am Eingang des Partikelfilters (28, 29) ein überstöchiometrisches Abgas mit einem Abgasluftverhältnis von 1,05 < λ < 1,2 einstellt.

2. Abgasnachbehandlungssystem nach Anspruch 1, **dadurch gekennzeichnet, dass** der Heizkatalysator (26) eine Mehrzahl von elektrischen Heizelementen (72, 74, 76, 78) umfasst.

3. Abgasnachbehandlungssystem nach Anspruch 2, **dadurch gekennzeichnet, dass** der Heizkatalysator (26) eine Mehrzahl von sequenziell angeordneten Heizstufen (62, 66, 68) umfasst, wobei jeder Heizstufe (62, 66, 68) ein Stützkatalysator (64) nachgeschaltet ist.

4. Abgasnachbehandlungssystem nach einem der Ansprüche 1 bis 3, **dadurch gekennzeichnet, dass** die elektrischen Heizelemente (72, 76, 78) als elektrische Heizscheiben (74) ausgebildet sind.

5. Abgasnachbehandlungssystem nach einem der Ansprüche 1 bis 4, **dadurch gekennzeichnet, dass** der Partikelfilter (28) frei von einer katalytischen Beschichtung ausgeführt ist.

6. Verfahren zur Abgasnachbehandlung eines Verbrennungsmotors (10) mit einem Abgasnachbehandlungssystem nach einem der Ansprüche 1 bis 5, umfassend folgende Schritte:
- Ermitteln eines Beladungszustands des Partikelfilters (28, 29),
- Ermitteln einer Bauteiltemperatur des Partikelfilters (28, 29),
- Aufheizen des Partikelfilters (28, 29) auf eine zur Oxidation des im Partikelfilter (28, 29) zurückgehaltenen Rußes notwendigen Regenerationstemperatur (T_{reg}), wenn eine Regeneration des Partikelfilters (28, 29) angefordert wird, wobei
- das elektrische Heizelement (72, 74, 76, 78) des Heizkatalysators (26) unmittelbar aus dem Generator (46) mit elektrischem Strom versorgt wird,
- bei Feststellen einer Regenerationsanforderung des Partikelfilters (28, 29) durch den Generator (46) eine Zusatzlast erzeugt wird, sodass ein Betriebspunkt (P1) des Verbrennungsmotors (10) bei gleicher Drehzahl (n₁ = n₂) in Richtung eines höheren Motordrehmoments verschoben wird, sodass sich bei gleicher Drehzahl (n) eine höhere Abgastemperatur (T_{EG}) einstellt, und wobei
- während der Regeneration des Partikelfilters (28, 29) der Verbrennungsmotor (10) mit einem unterstöchiometrischen oder stöchiometrischen Verbrennungsluftverhältnis betrieben wird und stromabwärts des letzten Drei-Wege-Katalysators (22, 24) Sekundärluft in die Abgasanlage (20) eingeblasen wird, derart, dass sich am Eingang des Partikelfilters (28, 29) ein überstöchiometrisches Abgas mit einem Abgasluftverhältnis von 1,05 < λ < 1,2 einstellt.

## Claims

1. Exhaust-gas aftertreatment system for an internal combustion engine (10), having an exhaust-gas system (20) which comprises a close-coupled three-way catalytic converter (22, 24) and comprises a particle filter (28, 29) which is arranged downstream of the close-coupled three-way catalytic converter (22, 24), wherein a heating catalytic converter (26) having at least one electric heating element (72, 74, 76, 78) is arranged downstream of the three-way catalytic converter (22, 24) and upstream of the particle filter (28, 29), wherein the electric heating element (72, 74, 76, 78) is connected to a generator (46) of the internal combustion engine (10) in such a way that it is possible for the at least one electric heating element (72, 74, 76, 78) to be heated directly by the electric current generated by the generator (46), wherein, in the exhaust-gas system (20), a second three-way catalytic converter (24) is arranged downstream of the first three-way catalytic converter (22) and upstream of the heating catalytic converter (26), and a first lambda probe (34) is arranged upstream of the first three-way catalytic converter (22) and a second lambda probe (36) is arranged downstream of the first three-way catalytic converter (22) and upstream of the second three-way catalytic converter (24), **characterized in that** an introduction point (60) for introduction of secondary air into the exhaust-gas system (20) is provided downstream of the second three-way catalytic converter (24) and upstream of the heating catalytic converter (26), and having a control unit (70) which is configured to generate an additional load by way of the generator (46) if a regeneration request of the particle filter (28, 29) is detected, so that an operating point (P1) of the internal combustion engine (10) is shifted in the direction of a higher engine torque at the same rotational speed (n₁=n₂) and a higher exhaust-gas temperature (T_{EG}) is established at the same rotational speed (n), wherein, during the regeneration of the particle filter (28, 29), the internal combustion engine (10) is operated with a substoichiometric or stoichiometric combustion air ratio and, downstream of the last three-way catalytic converter (22, 24), secondary air is injected into the exhaust-gas system (20) in such a way that, at the inlet of the particle filter (28, 29), a superstoichiometric exhaust gas with an exhaust gas/air ratio of 1.05 < λ < 1.2 is established.

2. Exhaust-gas aftertreatment system according to Claim 1, **characterized in that** the heating catalytic converter (26) comprises a plurality of electric heating elements (72, 74, 76, 78).

3. Exhaust-gas aftertreatment system according to Claim 2, **characterized in that** the heating catalytic converter (26) comprises a plurality of sequentially arranged heating stages (62, 66, 68), wherein a support catalytic converter (64) is arranged downstream of each heating stage (62, 66, 68).

4. Exhaust-gas aftertreatment system according to one of Claims 1 to 3, **characterized in that** the electric heating elements (72, 76, 78) are in the form of electric heating discs (74).

5. Exhaust-gas aftertreatment system according to one of Claims 1 to 4, **characterized in that** the particle filter (28) is designed without a catalytic coating.

6. Method for exhaust-gas aftertreatment of an internal combustion engine (10) having an exhaust-gas aftertreatment system according to one of Claims 1 to 5, comprising the following steps:
- ascertaining a loading state of the particle filter (28, 29),
- ascertaining a component temperature of the particle filter (28, 29),
- heating the particle filter (28, 29) to a regeneration temperature (T_{reg}) required for oxidation of the soot retained in the particle filter (28, 29) if a regeneration of the particle filter (28, 29) is requested, wherein
- the electric heating element (72, 74, 76, 78) of the heating catalytic converter (26) is supplied with electric current directly from the generator (46),
- generating an additional load by way of the generator (46) if a regeneration request of the particle filter (28, 29) is detected, so that an operating point (P1) of the internal combustion engine (10) is shifted in the direction of a higher engine torque at the same rotational speed (n₁=n₂), so that a higher exhaust-gas temperature (T_{EG}) is established at the same rotational speed (n), and wherein,
- during the regeneration of the particle filter (28, 29), the internal combustion engine (10) is operated with a substoichiometric or stoichiometric combustion air ratio and, downstream of the last three-way catalytic converter (22, 24), secondary air is injected into the exhaust-gas system (20) in such a way that, at the inlet of the particle filter (28, 29), a superstoichiometric exhaust gas with an exhaust gas/air ratio of 1.05 < λ < 1.2 is established.

## Revendications

1. Système de post-traitement de gaz d'échappement pour un moteur à combustion interne (10) avec une installation d'échappement (20) comprenant un catalyseur à trois voies proche du moteur (22, 24) et un filtre à particules (28, 29) agencé en aval du catalyseur à trois voies proche du moteur (22, 24), un catalyseur chauffant (26) comprenant au moins un élément chauffant électrique (72, 74, 76, 78) étant agencé en aval du catalyseur à trois voies (22, 24) et en amont du filtre à particules (28, 29), l'élément chauffant électrique (72, 74, 76, 78) étant relié à un générateur (46) du moteur à combustion interne (10) de telle sorte qu'un chauffage de l'au moins un élément chauffant électrique (72, 74, 76, 78) directement par le courant électrique produit par le générateur (46) est possible, un deuxième catalyseur à trois voies (24) étant agencé dans l'installation d'échappement (20) en aval du premier catalyseur à trois voies (22) et en amont du catalyseur chauffant (26), et une première sonde lambda (34) étant agencée en amont du premier catalyseur à trois voies (22) et une deuxième sonde lambda (36) étant agencée en aval du premier catalyseur à trois voies (22) et en amont du deuxième catalyseur à trois voies (24), **caractérisé en ce qu'**un point d'introduction (60) est prévu en aval du deuxième catalyseur à trois voies (24) et en amont du catalyseur chauffant (26) pour introduire de l'air secondaire dans l'installation d'échappement (20), ainsi qu'avec un appareil de commande (70) qui est conçu pour, lors de la détection d'une demande de régénération du filtre à particules (28, 29), produire une charge supplémentaire par le générateur (46) de telle sorte qu'un point de fonctionnement (P1) du moteur à combustion interne (10) est déplacé en direction d'un couple moteur plus élevé à la même vitesse de rotation (n₁ = n₂) et une température de gaz d'échappement plus élevée (T_{EG}) s'établit à la même vitesse de rotation (n), le moteur à combustion interne (10) fonctionnant pendant la régénération du filtre à particules (28, 29) avec un rapport d'air de combustion sous-stœchiométrique ou stœchiométrique et de l'air secondaire étant injecté dans l'installation d'échappement (20) en aval du dernier catalyseur à trois voies (22, 24), de telle sorte qu'un gaz d'échappement sur-stœchiométrique ayant un rapport d'air de gaz d'échappement de 1,05 < À < 1,2 s'établit à l'entrée du filtre à particules (28, 29).

2. Système de post-traitement de gaz d'échappement selon la revendication 1, **caractérisé en ce que** le catalyseur chauffant (26) comprend une pluralité d'éléments chauffants électriques (72, 74, 76, 78).

3. Système de post-traitement de gaz d'échappement selon la revendication 2, **caractérisé en ce que** le catalyseur chauffant (26) comprend une pluralité d'étages chauffants (62, 66, 68) agencés de manière séquentielle, chaque étage chauffant (62, 66, 68) étant suivi d'un catalyseur d'appoint (64).

4. Système de post-traitement de gaz d'échappement selon l'une quelconque des revendications 1 à 3, **caractérisé en ce que** les éléments chauffants électriques (72, 76, 78) sont configurés sous forme de disques chauffants électriques (74).

5. Système de post-traitement de gaz d'échappement selon l'une quelconque des revendications 1 à 4, **caractérisé en ce que** le filtre à particules (28) est réalisé exempt d'un revêtement catalytique.

6. Procédé de post-traitement de gaz d'échappement d'un moteur à combustion interne (10) avec un système de post-traitement de gaz d'échappement selon l'une quelconque des revendications 1 à 5, comprenant les étapes suivantes :
- la détermination d'un état de charge du filtre à particules (28, 29),
- la détermination d'une température de composant du filtre à particules (28, 29),
- le chauffage du filtre à particules (28, 29) à une température de régénération (T_{rég}) nécessaire à l'oxydation du noir de carbone retenu dans le filtre à particules (28, 29) lorsqu'une régénération du filtre à particules (28, 29) est demandée,
- l'élément chauffant électrique (72, 74, 76, 78) du catalyseur chauffant (26) étant alimenté en courant électrique directement à partir du générateur (46),
- une charge supplémentaire étant produite par le générateur (46) lors de la détection d'une demande de régénération du filtre à particules (28, 29), de telle sorte qu'un point de fonctionnement (P1) du moteur à combustion interne (10) est déplacé en direction d'un couple moteur plus élevé à la même vitesse de rotation (n₁ = n₂), de telle sorte qu'une température de gaz d'échappement plus élevée (T_{EG}) s'établit à la même vitesse de rotation (n), et
- pendant la régénération du filtre à particules (28, 29), le moteur à combustion interne (10) fonctionnant avec un rapport d'air de combustion sous-stœchiométrique ou stœchiométrique et de l'air secondaire étant injecté dans l'installation d'échappement (20) en aval du dernier catalyseur à trois voies (22, 24), de telle sorte qu'un gaz d'échappement sur-stœchiométrique ayant un rapport d'air de gaz d'échappement de 1,05 < À < 1,2 s'établit à l'entrée du filtre à particules (28, 29).
